# EUROPEAN PATENT SPECIFICATION

(11) **EP 2 552 058 B1**
(45) Date of publication and mention of the grant of the patent: **21.03.2018**
(21) Application number: 10853945.3
(22) Date of filing: 27.09.2010
(51) Int. Cl.: H04L 12/24, H04Q 11/00, H04L 12/18

(54) **METHOD, SYSTEM AND DEVICE FOR IMPLEMENTING MULTICAST PREVIEW**
VERFAHREN, SYSTEM UND VORRICHTUNG ZUR IMPLEMENTIERUNG EINER MULTICAST-VORSCHAU
PROCÉDÉ, SYSTÈME ET DISPOSITIF POUR METTRE EN OEUVRE UNE PRÉVISUALISATION DE MULTIDIFFUSION

(30) Priority: 29.06.2010 CN 201010220379
(43) Date of publication of application: 30.01.2013
(73) Proprietor: ZTE Corporation, Shenzhen, Guangdong 518057 (CN)
(72) Inventor: LUO, Haipeng, Shenzhen Guangdong 518057 (CN); YANG, Donghu, Shenzhen Guangdong 518057 (CN)
(74) Representative: Swindell & Pearson Limited
(86) International application number: PCT/CN2010/077373
(87) International publication number: WO 2012/000242

(56) References cited:
- EP-A1- 1 768 329
- CN-A- 101 102 210
- CN-A- 101 150 425
- CN-A- 101 414 920
- CN-A- 101 582 877
- JP-A- 2005 229 287
- US-A1- 2008 025 304
- "Gigabit-capable passive optical networks (G-PON): ONT management and control interface specification; G.984.4 (02/08)", ITU-T STANDARD, INTERNATIONAL TELECOMMUNICATION UNION, GENEVA ; CH, no. G.984.4 (02/08), 22 February 2008 (2008-02-22), pages 1-430, XP017466883, [retrieved on 2009-05-12]
- DAVE HOOD ERICSSON AB SWEDEN SHAO YAN CHINA UNICOM CHINA ZHANG DEZHI ZTE CORPORATION CHINA ZENG TAO ZTE CORPORATION CHINA: "Proposal to support multicast preview function in G.988", ITU-T DRAFT ; STUDY PERIOD 2009-2012, INTERNATIONAL TELECOMMUNICATION UNION, GENEVA ; CH, vol. 2/15, 26 August 2010 (2010-08-26), pages 1-4, XP017448103, [retrieved on 2010-08-26]
- 'Gigabit-capable Passive Optical Networks(G-PON):ONT management and control interface specification' G984.4,ITU-T June 2004, pages 1 - 114, XP017464156

## Description

### Technical Field

The present invention relates to the communication multicast technology, and in particular, to a method, system and optical network unit (ONU) apparatus for implementing multicast preview in a Gigabit-capable Passive Optical Network (GPON) system.

### Background of the Related Art

In a GPON system, using the current method, manufacturers can implement the multicast preview function of an optical network unit (ONU) by their respective interface extension modes.

Inventors of the present application have discovered that at present the multicast preview function of the ONU has not been implemented using a specialized ONT (optical network terminal) manage control interface (OMCI) entity. The manufacturers implement such function by their respective interface extension modes, thus the implementation modes for this function are not uniform such that butting intercommunication test is very difficult to be performed.

Thus, a uniform implementation mode is required to be designed for the multicast preview function of the ONU so as to standardize the intercommunication test of the GPON system and improve the efficiency of the intercommunication test, to help the manufacturers to implement the multicast preview function of the ONU quickly, thus promoting the technical development of optical line terminals (OLT) and ONU products in the GPON system.

CN101150425 discloses a control method for purview of multicast service of Ethernet passive optical network, an optical network unit and an optical line terminal, in which, the control method includes: an ONU receives a joining request of a multicast set of a user with an ID of the identity of the user and sends the request to the optical line terminal, which enquires the visit purview of the user to the multicast set and sets up a multicast transmit item transmitting said multicast set data to the user in the ONU when determining that said user can visit said set, when the ONU receives the data, it transmits the data to the user according to the transmit item.

CN101414920 discloses a method for realizing multicast preview in a point-to-multipoint optical network. The method comprises the steps as follows: an optical line terminal stores a user multicast authority control list and is provided with preview time limit; a terminal unit sends a user multicast request message to the optical line terminal, and the message carries a user identify label; the optical line terminal receives the user multicast request message, if the optical line terminal inquires the preview authority that the user has in the user multicast authority control list, a multicast stream is replicated to a user port by the terminal unit; the optical line terminal judges the preview time of the user; and the multicast stream is stopped being replicated when the preview time arrives at the preview time limit. The invention establishes and maintains a set of user multicast authority control list and a multicast program preview control list based on an ONU (optical network unit) in the optical line terminal (OLT) and provides the user with the preview of a segment of a program or a short time of a channel according to the user authority recorded in the control list, and the invention can effectively control the preview of the user.

EP1768329 discloses a method of realizing the preview of multicast video program in the wide-band access network which comprises: the preview authority of the subscriber is stored in the device of the access layer, and the device of the access layer agilely control the subscriber to have a video preview according to the said preview authority. The disclosure realizes the function of the preview of the multicast program in the wide-band access network in order to increase the attraction of the multicast video services to the domestic consumer. The disclosure realizes the agile control to the authority of the preview of the multicast program in order to increase effectively the efficiency of the process and the efficiency of the resource utilization. The disclosure also provides a system of realizing the preview of multicast video program in the wide-band access network.

### Content of the Invention

A technical problem to be solved by the present invention is to provide a method, system and apparatus for implementing multicast preview of an optical network unit so as to standardize intercommunication test of a GPON system.

According to the invention a method according to claim 1, a system according to claim 5 and an apparatus according to claim 9 are provided. Further improvements and embodiments are provided in the dependent claims.

The present invention implements the multicast preview function of the optical network unit by defining simple and effective function extension of the managed entity (ME), so as to standardize the intercommunication test of the GPON system and improve the efficiency of the intercommunication test, thereby promoting the technical development of optical line terminals (OLT) and ONU products in the GPON system greatly.

### Brief Description of Drawings

FIG. 1 is a flow chart of a method for implementing the multicast preview function in accordance with an embodiment of the present invention; and
FIG. 2 is a block diagram of an optical network unit apparatus for implementing the multicast preview function in accordance with an embodiment of the present invention.

### Preferred Embodiments of the Present Invention

The technical scheme of the present invention will be described in detail below in conjunction with the accompanying drawings and preferred embodiments. The embodiments exemplified below are intended to illustrate and explain the present invention only, and not to constitute a limitation to the technical scheme of the present invention.

The precondition of a method for implementing a multicast preview function in accordance with the present invention is to extend the definition of a managed entity (ME) described for a 9.3.27 multicast operations profile in standard G984.4. The existing definition of the ME is shown in Table 1.

**Table 1**

| Dynamic access control list table | | |
|---|---|---|
| Vector field | Field size | Function description |
| Table index | 2 bytes | For OLT distribution and recording the table index and its content |
| GEM port-ID | 2 bytes | GPON Encapsulated Mode (GEM) port identifier of the multicast data flow |
| VLAN ID | 2 bytes | Virtual Local Area Network (VLAN) identifier of the multicast data flow |
| Source IP address | 4 bytes | Source IP address of the multicast data flow |
| Destination IP address of the start of the multicast range | 4 bytes | Destination IP address of the start of the multicast range |
| Destination IP address of the end of the multicast range | 4 bytes | Destination IP address of the end of the multicast range |
| Inputted group bandwidth | 4 bytes | Inputted group bandwidth represented by bytes/second |
| Reserved | 2 bytes | Reserved field, generally set to be "0000" |

It can be seen from table 1 that a multicast channel list (can also be called as item) available for watching by the port, and relevant information, such as VLAN ID, GEM port-ID and Inputted group bandwidth of the multicast data flow, etc., are specified in the dynamic access control list table, that is, the list is used to implement a white list access control mode of a multicast protocol module in an ONU, i.e., a multicast channel list allowed to be watched.

The precondition of the white list access function is identical with that of the multicast preview function in that both are channels allowed to be watched. Their difference only lies in the watching time limit. There is no watching time limit for multicast channels in the white access list, and whether they can be continued to be watched depends on only whether their multicast addresses are aged; while there are requirements on the watching time limit for the multicast preview function, for example, the watching time limit is generally about 20 to 30s.

For such a difference described above, the present invention extends the Reserved field in combination with the existing definition of the ME in Table 1. The size of the Reserved field is 2 bytes (16 bits). The present invention uses the lowest bit therein. The default value 0 (0000) of the lowest bit, which is consistent with what the standard has stipulated, is used for labeling the multicast channel entry as a white list multicast channel entry (also called as item); while the value 1 (0001) of the lowest bit is used for labeling the multicast channel entry as a preview multicast channel entry (item).

The OLT and ONU's support for the extended definition of the ME is required to be provided in order to implement the present invention. For the OLT, the ONU is required to be configured according to the extended definition of the ME; for the ONU, the multicast preview function is required to be implemented according to the configuration of the OLT.

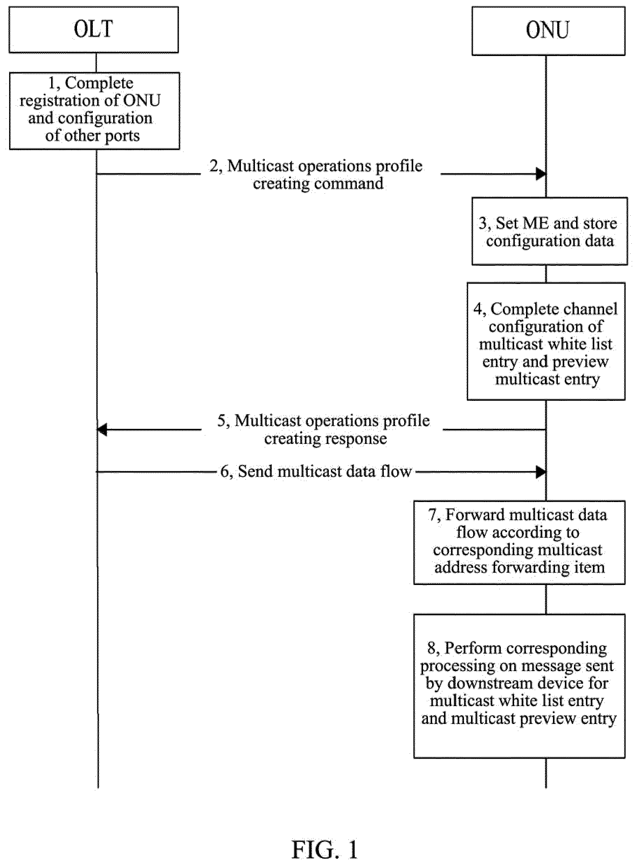

FIG. 1 provides a method for implementing the multicast preview function in accordance with an embodiment of the present invention. The method involves one OLT and one or more ONUs connected to the OLT, and comprises the following step.

In step 1, the OLT completes registration of the ONUs and initialized configuration of other ports.

In step 2, the OLT sends a multicast operations profile creating command to a corresponding ONU.

The OLT indicates in the sent command the multicast operations profile required to be created by the ONU and a multicast channel list (dynamic access control list table) required to be configured. For multicast channels of a multicast white list allowed to be watched, a Reserved field in the multicast channel list is set as an identifier value of a white list multicast channel entry (for example, the value is 0); for multicast channels for multicast preview, the Reserved field is set as an identifier value of a preview multicast channel entry (for example, the lowest bit is set as 1).

In step 3, the ONU sets a ME, and stores configuration data.

The ONU sets the corresponding ME after analyzing the command sent by the OLT according to the OMCI protocol, and stores the configuration data in the command into an OMCI global database after verifying that the command is legal.

In step 4, the ONU configures channel configuration of the multicast white list entry and the preview multicast entry.

The ONU configures both the white list multicast channel entry (item) and the preview multicast channel entry (item) according to the stored configuration data, generates a corresponding multicast address forwarding entry (item) according to the white list multicast channel entry and the preview multicast channel entry, and distinguishes the white list multicast channel entry from the preview multicast channel entry using different mark indexes.

In step 5, the ONU returns a multicast operations profile creating response to the OLT.

The interaction and butting of the ONU and OLT are completed in steps 2∼5 so as to implement the multicast preview function of the ONU.

In step 6, the OLT sends a multicast data flow to the corresponding ONU.

In step 7, the ONU forwards the multicast data flow according to the corresponding multicast address forwarding item.

In step 8, the ONU performs corresponding processing on a message sent by a downstream device for the multicast white list channel and the multicast preview channel.

When processing an Internet Group Management Protocol (IGMP) Join Message sent by the downstream device (such as, a family gateway or set top box), the ONU
for the multicast white list channel, learns a multicast address, configures the corresponding multicast address entry (item) in a multicast address forwarding table, implements a aging function according to multicast address aging time, and refreshes the aging time automatically according to the newly received multicast join message before the aging time expires;
for the preview multicast channel, learns the multicast address while setting expiration time of a timer to be equal to preset preview time, and configures the corresponding multicast address forwarding entry (item) in the multicast address forwarding table. The ONU deletes the corresponding multicast preview channel entry when the expiration time of the timer expires, and deletes the corresponding multicast address entry from the multicast address forwarding table at the same time so as to guarantee that the ONU automatically disconnects the multicast data flow when the multicast preview time expires, to implement the preview function of the multicasting data flow.

It should be noted that the preset preview time is required to be shorter than the default aging time of the multicast address stipulated in the RFC 2236 protocol, and after the new multicast join message is received when the preview entry is watched, the remaining of the preview time is not influenced by the new multicast join message, that is, unlike the multicast address forwarding entry of the normal multicast white list, it will not be refreshed again when the new multicast join message is received. Therefore, a preview user can be prevented from obtaining many times the preview content to be watched by clicking the preview function on a terminal repeatedly.

For the method embodiment described above, the present invention provides a system for implementing the multicast preview function of an optical network unit correspondingly, which comprises one LOT and one or more ONUs connected to the OLT.

The OLT is configured to command the corresponding ONU to create a multicast operations profile after completing registration of the optical network units and configuration of ports; send a multicast data flow to the ONU after receiving a multicast operations profile creating response returned by the ONU.

The OLT indicates the multicast operations profile required to be created by the ONU and a multicast channel list to be configured. For white list multicast channels allowed to be watched, the Reserved field of the corresponding multicast channel entry in the multicast channel list is set as 0; for multicast channels for the multicast preview, the lowest bit of the Reserved field of the corresponding multicast channel entry is set as 1.

The ONU is configured to set the corresponding ME after receiving the command sent by the OLT, and store configuration data into a local database, generate the corresponding multicast address forwarding term according to a white list multicast channel term and a preview multicast channel item after completing the configuration of the white list multicast channel term and the preview multicast channel item, and return the multicast operations profile creating response to the OLT.

The ONU forwards the multicast data flow according to the corresponding multicast address forwarding item after receiving the multicast data flow sent by the OLT, performs corresponding processing on the message sent by a downstream device for the multicast white list channel and the multicast preview channel. The different processing has been described already previously, and will not be repeated any more.

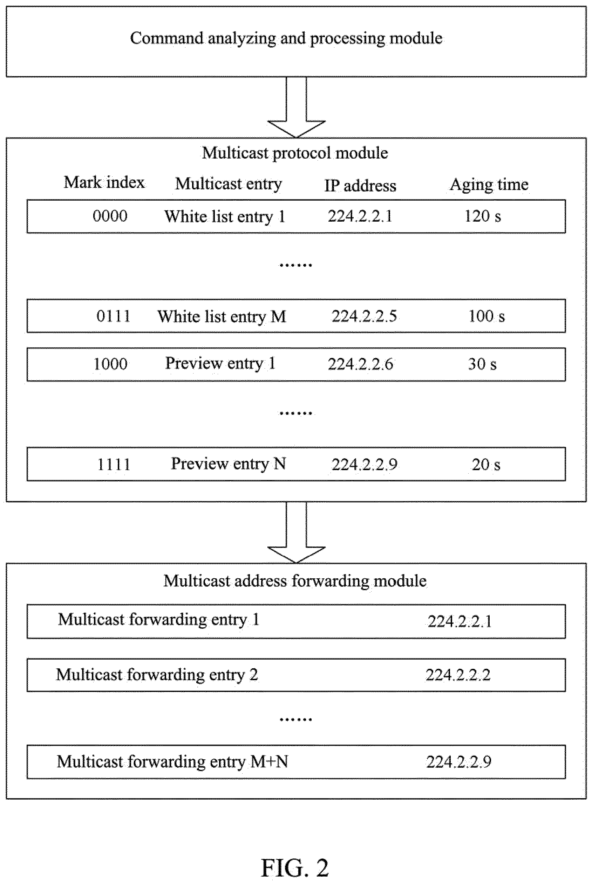

FIG. 2 shows an optical network unit apparatus for implementing the multicast preview function in accordance with an embodiment of the present invention comprising a command analyzing and processing module, a multicast protocol module and a multicast address forwarding module which are connected successively.
the command analyzing and processing module is configured to analyze a multicast operations profile creating command sent by an OLT, configure a corresponding managed entity, and store configuration data in the legal command into a database (not shown in the figure), while instructing the multicast protocol module to configure a corresponding multicast channel term.

The multicast protocol module is configured to configure a white list multicast channel term and a preview multicast channel item according to an instruction of the command analyzing and processing module and the configuration data stored in the database to output to the multicast address forwarding module, and return a multicast operations profile creating response to the optical line terminal after completing the configuration of the preview multicast channel term and the white list multicast channel item.

The multicast address forwarding module is configured to generate a corresponding multicast address forwarding term according to the white list multicast channel term and the preview multicast channel term output by the multicast protocol module, and forward a multicast data flow according to the corresponding multicast address forwarding item after receiving the multicast data flow sent by the OLT.

The ONU processes an IGMP join message sent by a downstream device differently for the multicast white list channel and the multicast preview channel. The different processing has been described already previously, and will not be repeated any more.

It may be understood by those skilled in the art that all or some of the steps in the described method can be implemented by related hardware instructed by programs which may be stored in computer readable storage mediums, such as read-only memory, disk or CD-ROM, etc. Alternatively, all or some of the steps in the embodiments described above may also be implemented using one or more integrated circuits. Accordingly, each module/unit in the embodiments described above may be implemented in a form of hardware, or software functional module. The present invention is not limited to combinations of hardware and software in any particular form.

### Industrial Applicability

The present invention implements the multicast preview function of the optical network unit by defining simple and effective function extension of the managed entity (ME), so as to standardize the intercommunication test of the GPON system and improve the efficiency of the intercommunication test, thereby promoting the technical development of optical line terminals (OLT) and ONU products in the GPON system greatly.

## Claims

1. A method for implementing multicast preview, **characterized by** involving a Gigabit-capable Passive Optical Network (GPON) system which comprises an optical line terminal and one or more optical network units connected to the optical line terminal and comprising:
the optical line terminal sending (2) a multicast operations profile creating command to an optical network unit after completing (1) registration of the optical network units and configuration of ports; and
the optical network unit setting (3) a corresponding managed entity according to the multicast operations profile creating command sent by the optical line terminal, and storing (3) configuration data comprised in the multicast operations profile creating command and configuring (4) a corresponding preview multicast channel entry according to the configuration data:
wherein
the configuration data in the multicast operations profile creating command includes: a multicast operations profile to be created and multicast channel entries to be configured, and a Reserved field in a multicast channel entry used as an identifier that distinguishes a white list multicast channel entry from a preview multicast channel entry.

2. The method according to claim 1, wherein
among the multicast channel entries, for the white list multicast channel entry, the reserved field is set as an identifier value of the white list multicast channel entry, and for the preview multicast channel entry, the reserved field is set as an identifier value of the preview multicast channel entry; and
the step of configuring the corresponding preview multicast channel entry according to the configuration data comprises: the optical network unit configuring a corresponding white list multicast channel entry for the identifier value of the white list multicast channel entry according to the reserved field, in addition to configuring the corresponding preview multicast channel entry for the identifier value of the preview multicast channel entry according to the reserved field, and listing the preview multicast channel entry and the white list multicast channel entry separately using two different mark indexes.

3. The method according to claim 2, wherein after the step of configuring the corresponding preview multicast channel entry according to the configuration data, the method further comprises:
the optical network unit generating a corresponding multicast address forwarding entry according to the configured white list multicast channel entry and preview multicast channel entry, and returning (5) a multicast operations profile creating response to the optical line terminal; and
the optical network unit forwarding (7) a multicast data flow according to the corresponding multicast address forwarding entry after receiving (6) the multicast data flow sent by the optical line terminal, and performing (8) corresponding processing when receiving a message sent by a downstream device: for the preview multicast channel entry, learning a multicast address while setting expiration time of a timer to be equal to preset preview time, and configuring the corresponding multicast address forwarding entry; for the multicast white list channel entry, learning the multicast address, configuring the corresponding multicast address forwarding entry, and implementing an aging function according to multicast address aging time, the preview time being less than the aging time.

4. The method according to claim 3, wherein the step of performing corresponding process when receiving the message sent by the downstream device further comprises:
for the multicast preview channel entry, the optical network unit deleting the corresponding preview multicast channel entry when the expiration time of the timer expires, and deleting the corresponding multicast address forwarding entry at the same time; for the multicast white list channel entry, before the aging time expires, refreshing the aging time automatically according to a newly received multicast data flow message.

5. A Gigabit-capable Passive Optical Network (GPON) system for implementing multicast preview, **characterized by** comprising an optical line terminal and one or more optical network units connected to the optical line terminal, wherein
the optical line terminal is configured to send (2) a multicast operations profile creating command to an optical network unit after completing (1) registration of the optical network units and configuration of ports; and
the optical network unit is configured to set (3) a corresponding managed entity according to the multicast operations profile creating command sent by the optical line terminal, and store (3) configuration data comprised in the multicast operations profile creating command and configure (4) a corresponding preview multicast channel entry according to the configuration data:
wherein
the configuration data in the multicast operations profile creating command includes: a multicast operations profile to be created and multicast channel entries to be configured, and a Reserved field in a multicast channel entry used as an identifier that distinguishes a white list multicast channel entry from a preview multicast channel entry.

6. The system according to claim 5, wherein
among the multicast channel entries, for the white list multicast channel entry, the reserved field is set as an identifier value of the white list multicast channel entry, and for the preview multicast channel entry, the reserved field is set as an identifier value of the preview multicast channel entry; and
the optical network unit is configured to configure the corresponding preview multicast channel entry according to the configuration data by configuring a corresponding white list multicast channel entry for the identifier value of the white list multicast channel entry according to the reserved field, in addition to configuring the corresponding preview multicast channel entry for the identifier value of the preview multicast channel entry according to the reserved field, and listing the preview multicast channel entry and the white list multicast channel entry separately using two different mark indexes.

7. The system according to claim 6, wherein
the optical network unit is further configured to generate a corresponding multicast address forwarding entry according to the configured white list multicast channel entry and preview multicast channel entry, return (5) a multicast operations profile creating response to the optical line terminal, forward (7) a multicast data flow according to the corresponding multicast address forwarding entry after receiving (6) the multicast data flow sent by the optical line terminal, and perform (8) corresponding processing when receiving a message sent by a downstream device: for the preview multicast channel entry, learn a multicast address while setting expiration time of a timer to be equal to preset preview time, and configure the corresponding multicast address forwarding entry; for the multicast white list channel entry, learn the multicast address, configure the corresponding multicast address forwarding entry, and implement an aging function according to multicast address aging time, the preview time being less than the aging time.

8. The system according to claim 7, wherein
the optical network unit is further configured to, for the multicast preview channel entry, delete the corresponding preview multicast channel entry when the expiration time of the timer expires, and delete the corresponding multicast address forwarding entry at the same time; for the multicast white list channel entry, before the aging time expires, refresh the aging time automatically according to a newly received multicast data flow message.

9. An optical network unit apparatus for implementing multicast preview in a Gigabit-capable Passive Optical Network (GPON) system, **characterized by** comprising a command analyzing and processing module, a multicast protocol module and a multicast address forwarding module which are connected successively, wherein
the command analyzing and processing module is configured to analyze a multicast operations profile creating command sent (2) by an optical line terminal, configure (3) a corresponding managed entity, and store (3) configuration data comprised in the multicast operations profile creating command into a database, while instructing the multicast protocol module to configure a corresponding multicast channel entry;
the multicast protocol module is configured to configure (4) a preview multicast channel entry according to an instruction of the command analyzing and processing module and the configuration data stored in the database to output to the multicast address forwarding module; and
the multicast address forwarding module is configured to generate a corresponding multicasting address forwarding entry according to the preview multicast channel entry output by the multicast protocol module:
wherein
the command analyzing and processing module is configured to analyze the multicast operations profile creating command sent (2) by the optical line terminal by analyzing the multicast operations profile creating command according to an optical network terminal manage control interface protocol, and storing the multicast operations profile to be created and multicast channel entries to be configured which are contained in the configuration data after the multicast operations profile creating command is verified to be legal, and using a Reserved field in a multicast channel entry as an identifier that distinguishes a white list multicast channel entry from a preview multicast channel entry.

10. The apparatus according to claim 9, wherein
among the multicast channel entries, for the white list multicast channel entry, the reserved field is set as an identifier value of the white list multicast channel entry, and for the preview multicast channel entry, the reserved field is set as an identifier value of the preview multicast channel entry; and
the multicast protocol module is configured to configure the corresponding preview multicast channel entry according to an instruction of the command analyzing and processing module and the configuration data stored in the database by configuring a corresponding white list multicast channel entry for the identifier value of the white list multicast channel entry according to the reserved field, in addition to configuring the corresponding preview multicast channel entry for the identifier value of the preview multicast channel entry according to the reserved field, and listing the preview multicast channel entry and the white list multicast channel entry separately using two different mark indexes.

11. The apparatus according to claim 10, wherein
the multicast protocol module is further configured to return (5) a multicast operations profile creating response to the optical line terminal after completing configuration of the preview multicast channel entry and the white list multicast channel entry; and
the multicast address forwarding module is further configured to forward (7) a multicast data flow according to the corresponding multicast address forwarding entry after receiving (6) the multicast data flow sent by the optical line terminal, and perform (8) corresponding processing when receiving a message sent by a downstream device: for the preview multicast channel entry, learn a multicast address while setting expiration time of a timer to be equal to preset preview time, and configure the corresponding multicast address forwarding entry; for the multicast white list channel entry, learn the multicast address, configure the corresponding multicast address forwarding entry, and implement an aging function according to multicast address aging time, the preview time being less than the aging time.

12. The apparatus according to claim 11, wherein
the multicast address forwarding module is further configured to, for the multicast preview channel entry, delete the corresponding preview multicast channel entry when the expiration time of the timer expires, and delete the corresponding multicast address forwarding entry at the same time; for the multicast white list channel entry, before the aging time expires, refresh the aging time automatically according to a newly received multicast data flow message.

## Patentansprüche

1. Verfahren zum Implementieren einer Multicast-Vorschau, **dadurch gekennzeichnet, dass** ein Gigabit-fähiges-Passives-Optisches-Netzwerk- (GPON) -System involviert ist, das ein Optische-Leitung-Terminal und eine oder mehrere Optisches-Netzwerk-Einheiten umfasst, die mit dem Optische-Leitung-Terminal verbunden sind, und dass es umfasst:
dass das Optische-Leitung-Terminal (2) ein Multicast-Operationen-Profil-Erzeugungs-Befehl an eine Optisches-Netzwerk-Einheit sendet, nach Komplettierung (1) einer Registrierung der Optisches-Netzwerk-Einheiten und Konfiguration von Ports; und
die Optisches-Netzwerk-Einheit eine entsprechende verwaltete Entität einstellt (3), gemäß dem Multicast-Operationen-Profil-Erzeugungs-Befehl, der von dem Optische-Leitung-Terminal gesendet wird, und Konfigurationsdaten speichert (3), die in dem Multicast-Operationen-Profil-Erzeugungs-Befehl enthalten sind, und einen entsprechenden Vorschau-Multicast-Kanal-Eintrag gemäß den Konfigurationsdaten konfiguriert (4): wobei
die Konfigurationsdaten in dem Multicast-Operationen-Profil-Erzeugungs-Befehl umfassen: ein Multicast-Operationen-Profil, das zu erzeugen ist, und Multicast-Kanal-Einträge, die zu konfigurieren sind, und ein Reserviert-Feld in einem Multicast-Kanal-Eintrag, verwendet als Identifikator, der einen Weiße-Liste-Multicast-Kanal-Eintrag von einem Vorschau-Multicast-Kanal-Eintrag unterscheidet.

2. Verfahren nach Anspruch 1, wobei
unter den Multicast-Kanal-Einträgen, für den Weiße-Liste-Multicast-Kanal-Eintrag das reservierte Feld als ein Identifikatorwert des Weiße-Liste-Multicast-Kanal-Eintrags gesetzt ist, und für den Vorschau-Multicast-Kanal-Eintrag das reservierte Feld als ein Identifikatorwert des Vorschau-Multicast-Kanal-Eintrags gesetzt ist; und
der Schritt zum Konfigurieren des entsprechenden Vorschau-Multicast-Kanal-Eintrags gemäß der Konfigurationsdaten umfasst: dass die Optisches-Netzwerk-Einheit einen entsprechenden Weiße-Liste-Multicast-Kanal-Eintrag für den Identifikatorwert des Weiße-Liste-Multicast-Kanal-Eintrags gemäß dem reservierten Feld konfiguriert, zusätzlich zu einem Konfigurieren des entsprechenden Vorschau-Multicast-Kanal-Eintrags für den Identifikatorwert des Vorschau-Multicast-Kanal-Eintrags gemäß dem reservierten Feld und Auflisten des Vorschau-Multicast-Kanal-Eintrags und des Weiße-Liste-Multicast-Kanal-Eintrags separat unter Verwendung von zwei verschiedenen Zeichen-Indizes.

3. Verfahren nach Anspruch 2, wobei nach dem Schritt des Konfigurierens des entsprechenden Vorschau-Multicast-Kanal-Eintrags gemäß den Konfigurationsdaten das Verfahren ferner umfasst:
dass die Optisches-Netzwerk-Einheit einen entsprechenden Multicast-Adresse-Weiterleitungs-Eintrag gemäß dem konfigurierten Weiße-Liste-Multicast-Kanal-Eintrag und Vorschau-Multicast-Kanal-Eintrag erzeugt und Zurückgeben (5) einer Multicast-Operationen-Profil-Erzeugungs-Antwort an das Optische-Leitungs-Terminal; und
dass die Optisches-Netzwerk-Einheit einen Multicast-Datenfluss weiterleitet (7), gemäß dem entsprechenden Multicast-Adresse-Weiterleitungs-Eintrag nach Empfangen (6) des Multicast-Datenflusses, gesendet von dem Optische-Leitung-Terminal, und Durchführen (8) entsprechender Verarbeitung, wenn eine Nachricht empfangen wird, die von einer stromabwärtigen Einrichtung gesendet wird: für den Vorschau-Multicast-Kanal-Eintrag, Lernen einer Multicast-Adresse während eine Ablaufzeit eines Zeitgebers gleich einer voreingestellten Vorschauzeit eingestellt wird, und Konfigurieren des entsprechenden Multicast-Adresse-Weiterleitungs-Eintrags; für den Multicast-Weiße-Liste-Kanal-Eintrag, Lernen der Multicast-Adresse, Konfigurieren des entsprechenden Multicast-Adresse-Weiterleitungs-Eintrags und Implementieren einer Altersfunktion gemäß einer Multicast-Adresse-Alterszeit, wobei die Vorschauzeit weniger ist als die Alterszeit.

4. Verfahren nach Anspruch 3, wobei der Schritt des Durchführens eines entsprechenden Prozesses, wenn die Nachricht, die von der stromabwärtigen Einrichtung gesendet wird, empfangen wird, ferner umfasst:
für den Multicast-Vorschau-Kanal-Eintrag, dass die Optisches-Netzwerk-Einheit den entsprechenden Vorschau-Multicast-Kanal-Eintrag löscht, wenn die Ablaufzeit des Zeitgebers abläuft, und Löschen des entsprechenden Multicast-Adress-Weiterleitungs-Eintrags zur selben Zeit; für den Multicast-Weiße-Liste-Kanal-Eintrag, bevor die Alterszeit abläuft, Auffrischen der Alterszeit automatisch gemäß einer neu empfangenen Multicast-Datenfluss-Nachricht.

5. Gigabit-fähiges-Passives-Optisches-Netzwerk- (GPON) - System zum Implementieren einer Multicast-Vorschau, **dadurch gekennzeichnet, dass** es ein Optische-Leitung-Terminal und eine oder mehrere Optisches-Netzwerk-Einheiten umfasst, die mit dem Optische-Leitung-Terminal verbunden sind, wobei
das Optische-Leitung-Terminal konfiguriert ist, ein Multicast-Operationen-Profil-Erzeugungs-Befehl an eine Optische-Netzwerk-Einheit zu senden (2), nach Komplettierung (1) einer Registrierung der Optisches-Netzwerk-Einheiten und Konfiguration von Ports; und
die Optisches-Netzwerk-Einheit konfiguriert ist, eine entsprechende verwaltete Entität gemäß dem Multicast-Operationen-Profil-Erzeugungs-Befehl einzustellen (3), gesendet von dem Optische-Leitung-Terminal, und Konfigurationsdaten zu speichern (3), die in dem Multicast-Operationen-Profil-Erzeugungs-Befehl enthalten sind, und einen entsprechenden Vorschau-Multicast-Kanal-Eintrag zu konfigurieren (4), gemäß den Konfigurationsdaten:
wobei
die Konfigurationsdaten in dem Multicast-Operationen-Profil-Erzeugungs-Befehl umfassen: ein Multicast-Operationen-Profil, das zu erzeugen ist, und Multicast-Kanal-Einträge, die zu konfigurieren sind, und ein reserviertes Feld in einem Multicast-Kanal-Eintrag, das als ein Identifikator verwendet wird, der einen Weiße-Liste-Multicast-Kanal-Eintrag von einem Vorschau-Multicast-Kanal-Eintrag unterscheidet.

6. System nach Anspruch 5, wobei
unter den Multicast-Kanal-Einträgen, für den Weiße-Liste-Multicast-Kanal-Eintrag das reservierte Feld als ein Identifikatorwert des Weiße-Liste-Multicast-Kanal-Eintrags gesetzt ist, und für den Vorschau-Multicast-Kanal-Eintrag das reservierte Feld als ein Identifikatorwert des Vorschau-Multicast-Kanal-Eintrags gesetzt ist; und
die Optisches-Netzwerk-Einheit konfiguriert ist, den entsprechenden Vorschau-Multicast-Kanal-Eintrag gemäß den Konfigurationsdaten zu konfigurieren, durch Konfigurieren eines entsprechenden Weiße-Liste-Multicast-Kanal-Eintrags für den Identifikatorwert des Weiße-Liste-Multicast-Kanal-Eintrags gemäß dem reservierten Feld, zusätzlich zu einem Konfigurieren des entsprechenden Vorschau-Multicast-Kanal-Eintrags für den Identifikatorwert des Vorschau-Multicast-Kanal-Eintrags gemäß dem reservierten Feld, und Auflisten des Vorschau-Multicast-Kanal-Eintrags und des Weiße-Liste-Multicast-Kanal-Eintrags separat unter Verwendung von zwei verschiedenen Zeichen-Indizes.

7. System nach Anspruch 6, wobei
die Optisches-Netzwerk-Einheit ferner konfiguriert ist, einen entsprechenden Multicast-Adresse-Weiterleitungs-Eintrag gemäß dem konfigurierten Weiße-Liste-Multicast-Kanaleintrag und dem Vorschau-Multicast-Kanal-Eintrag zu erzeugen, eine Multicast-Operationen-Profil-Erzeugungs-Antwort an das Optische-Leitungs-Terminal zurückzugeben (5), einen Multicast-Datenfluss weiterzuleiten (7) gemäß dem entsprechenden Multicast-Adresse-Weiterleitungs-Eintrag nach Empfangen (6) des Multicast-Datenflusses, gesendet von dem Optische-Leitung-Terminal, und entsprechende Verarbeitung durchzuführen (8), wenn eine Nachricht empfangen wird, die von einer stromabwärtigen Einrichtung gesendet wird: für den Vorschau-Multicast-Kanal-Eintrag eine Multicast-Adresse zu lernen, während eines Einstellens einer Ablaufzeit eines Zeitgebers gleich einer voreingestellten Vorschauzeit, und den entsprechenden Multicast-Adresse-Weiterleitungs-Eintrag zu konfigurieren; für den Multicast-Weiße-Liste-Kanal-Eintrag, die Multicast-Adresse zu lernen, den entsprechenden Multicast-Adresse-Weiterleitungs-Eintrag zu konfigurieren, und eine Altersfunktion gemäß einer Multicast-Adresse-Alterszeit zu implementieren, wobei die Vorschauzeit weniger ist als die Alterszeit.

8. System nach Anspruch 7, wobei
die Optische-Netzwerk-Einheit ferner konfiguriert ist, für den Multicast-Vorschau-Kanal-Eintrag den entsprechenden Vorschau-Multicast-Kanal-Eintrag zu löschen, wenn die Ablaufzeit des Zeitgebers abläuft, und den entsprechenden Multicast-Adresse-Weiterleitungs-Eintrag zur gleichen Zeit zu löschen; für den Multicast-Weiße-Liste-Kanal-Eintrag, bevor die Alterszeit abläuft, die Alterszeit automatisch aufzufrischen, gemäß einer neu empfangenen Multicast-Datenfluss-Nachricht.

9. Optisches-Netzwerk-Einheit-Gerät zum Implementieren einer Multicast-Vorschau in einem Gigabit-fähiges-Passiv-Optisches-Netzwerk- (GPON) -System, **dadurch gekennzeichnet, dass** es ein Befehl-Analyse-und-Verarbeitungs-Modul, ein Multicast-Protokoll-Modul und ein Multicast-Adress-Weiterleitungs-Modul umfasst, die nacheinander verbunden sind, wobei
das Befehl-Analyse-und-Verarbeitungs-Modul konfiguriert ist, einen Multicast-Operationen-Profil-Erzeugungs-Befehl zu analysieren, der von einem Optische-Leitung-Terminal gesendet (2) wird, eine entsprechende verwaltete Entität zu konfigurieren (3), und Konfigurationsdaten, die in dem Multicast-Operationen-Profil-Erzeugungs-Befehl enthalten sind, in einer Datenbank zu speichern (3), während das Multicast-Protokoll-Modul instruiert wird, einen entsprechenden Multicast-Kanal-Eintrag zu konfigurieren;
das Multicast-Protokoll-Modul konfiguriert ist, einen Vorschau-Multicast-Kanal-Eintrag zu konfigurieren (4), gemäß einer Instruktion des Befehl-Analyse-und-Verarbeitungs-Moduls und der Konfigurationsdaten, die in der Datenbank gespeichert sind, zur Ausgabe an das Multicast-Adresse-Weiterleitungs-Modul; und
das Multicast-Adresse-Weiterleitungs-Modul konfiguriert ist, einen entsprechenden Multicast-Adresse-Weiterleitungs-Eintrag gemäß dem Vorschau-Multicast-Kanal-Eintrag, ausgegeben von dem Multicast-Protokoll-Modul, zu erzeugen:
wobei
das Befehl-Analyse-und-Verarbeitungs-Modul konfiguriert ist, den Multicast-Operationen-Profil-Erzeugungs-Befehl, der von dem Optische-Leitung-Terminal gesendet (2) wird, zu analysieren, durch Analysieren des Multicast-Operationen-Profil-Erzeugungs-Befehls gemäß einem Optisches-Netzwerk-Terminal-Verwaltung-Steuerung-Schnittstelle-Protokoll und Speichern des Multicast-Operationen-Profils, das erzeugt werden soll, und Multicast-Kanal-Einträge, die zu konfigurieren sind, die enthalten sind in den Konfigurationsdaten, nachdem der Multicast-Operationen-Profil-Erzeugungs-Befehl als legal verifiziert ist, und Verwenden eines reservierten Felds in dem Multicast-Kanal-Eintrag als einen Identifikator, der einen Weiße-Liste-Multicast-Kanaleintrag von einem Vorschau-Multicast-Kanal-Eintrag unterscheidet.

10. Gerät nach Anspruch 9, wobei
unter den Multicast-Kanal-Einträgen, für den Weiße-Liste-Multicast-Kanal-Eintrag das reservierte Feld als ein Identifikatorwert des Weiße-Liste-Multicast-Kanal-Eintrags gesetzt ist, und für den Vorschau-Multicast-Kanal-Eintrag das reservierte Feld als ein Identifikatorwert des Vorschau-Multicast-Kanal-Eintrags gesetzt ist; und
das Multicast-Protokoll-Modul konfiguriert ist, den entsprechenden Vorschau-Multicast-Kanal-Eintrag gemäß einer Instruktion des Befehl-Analyse-und-Verarbeitung-Moduls und der Konfigurationsdaten, die in der Datenbank gespeichert sind, zu konfigurieren, durch Konfiguration eines entsprechenden Weiße-Liste-Multicast-Kanal-Eintrags für den Identifikatorwert des Weiße-Liste-Multicast-Kanal-Eintrags gemäß dem reservierten Feld, zusätzlich zu einem Konfigurieren des entsprechenden Vorschau-Multicast-Kanal-Eintrags für den Identifikatorwert des Vorschau-Multicast-Kanal-Eintrags gemäß dem reservierten Feld und Auflisten des Vorschau-Multicast-Kanal-Eintrags und des Weiße-Liste-Multicast-Kanal-Eintrags getrennt unter Verwendung von zwei verschiedenen Zeichen-Indizes.

11. Gerät nach Anspruch 10, wobei
das Multicast-Protokoll-Modul ferner konfiguriert ist, eine Multicast-Operationen-Profil-Erzeugungs-Antwort an das Optische-Leitung-Terminal zurückzugeben (5) nach Komplettierung einer Konfiguration des Vorschau-Multicast-Kanal-Eintrags und des Weiße-Liste-Multicast-Kanal-Eintrags; und
wobei das Multicast-Adresse-Weiterleitungs-Modul ferner konfiguriert ist, einen Multicast-Datenfluss weiterzuleiten (7) gemäß dem entsprechenden Multicast-Adresse-Weiterleitungs-Eintrag nach Empfangen (6) des Multicast-Datenflusses, der von dem Optische-Leitung-Terminal gesendet wird, und Durchführen (8) entsprechender Verarbeitung, wenn eine Nachricht empfangen wird, die von einer stromabwärtigen Einrichtung gesendet wird: für den Vorschau-Multicast-Kanal-Eintrag, eine Multicast-Adresse zu lernen, während eine Ablaufzeit eines Zeitgebers gleich einer voreingestellten Vorschauzeit eingestellt wird, und den entsprechenden Multicast-Adresse-Weiterleitungs-Eintrag zu konfigurieren; für den Multicast-Weiße-Liste-Kanal-Eintrag, die Multicast-Adresse zu lernen, den entsprechenden Multicast-Adresse-Weiterleitungs-Eintrag zu konfigurieren und eine Altersfunktion gemäß einer Multicast-Adresse-Alterszeit zu konfigurieren, wobei die Vorschauzeit geringer ist als die Alterszeit.

12. Gerät nach Anspruch 11, wobei
das Multicast-Adresse-Weiterleitungs-Modul ferner konfiguriert ist, für den Multicast-Vorschau-Kanal-Eintrag den entsprechenden Vorschau-Multicast-Kanal-Eintrag zu löschen, wenn die Ablaufzeit des Zeitgebers abläuft, und den entsprechenden Multicast-Adresse-Weiterleitungs-Eintrag zur selben Zeit zu löschen; für den Multicast-Weiße-Liste-Kanal-Eintrag, bevor die Alterszeit abläuft, die Alterszeit automatisch aufzufrischen, gemäß einer neu empfangenen Multicast-Datenfluss-Nachricht.

## Revendications

1. Procédé pour mettre en oeuvre une prévisualisation de multidiffusion, **caractérisé en ce qu'**il implique un système de réseau optique passif (GPON) compatible Gigabit qui comprend un terminal de ligne optique et une ou plusieurs unités de réseau optique connectées au terminal de ligne optique et comprenant :
l'envoi (2) par le terminal de ligne optique d'une commande de création de profil d'opérations de multidiffusion à une unité de réseau optique après avoir achevé (1) l'enregistrement des unités de réseau optique et la configuration des ports ; et
la définition (3) par l'unité de réseau optique d'une entité gérée correspondante conformément à la commande de création de profil d'opérations de multidiffusion envoyée par le terminal de ligne optique, et le stockage (3) de données de configuration comprises dans la commande de création de profil d'opérations de multidiffusion et la configuration (4) d'une entrée de canal de multidiffusion de prévisualisation correspondante conformément aux données de configuration :
dans lequel
les données de configuration dans la commande de création de profil d'opérations de multidiffusion comprennent : un profil d'opérations de multidiffusion à créer et des entrées de canal de multidiffusion à configurer, et un champ réservé dans une entrée de canal de multidiffusion utilisé comme un identifiant qui distingue une entrée de canal de multidiffusion de liste blanche d'une entrée du canal de multidiffusion de prévisualisation.

2. Procédé selon la revendication 1, dans lequel
parmi les entrées de canal de multidiffusion, pour l'entrée de canal de multidiffusion de liste blanche, le champ réservé est défini comme une valeur d'identifiant de l'entrée de canal de multidiffusion de liste blanche, et pour l'entrée de canal de multidiffusion de prévisualisation, le champ réservé est défini comme une valeur d'identifiant de l'entrée de canal de multidiffusion de prévisualisation. ; et
l'étape de configuration de l'entrée de canal de multidiffusion de prévisualisation correspondante conformément aux données de configuration comprend : la configuration par l'unité de réseau optique d'une entrée de canal de multidiffusion de liste blanche correspondante pour la valeur d'identifiant de l'entrée de canal de multidiffusion de liste blanche conformément au champ réservé, en plus de la configuration de l'entrée de canal de multidiffusion de prévisualisation correspondante pour la valeur d'identifiant de l'entrée de canal de multidiffusion de prévisualisation conformément au champ réservé, et le listage de l'entrée de canal de multidiffusion de prévisualisation et de l'entrée de canal de multidiffusion de liste blanche séparément en utilisant deux index de marques différents.

3. Procédé selon la revendication 2, dans lequel après l'étape de configuration de l'entrée de canal de multidiffusion de prévisualisation correspondante conformément aux données de configuration, le procédé comprend en outre :
la génération par l'unité de réseau optique d'une entrée de transfert d'adresse de multidiffusion correspondante conformément à l'entrée de canal de multidiffusion de liste blanche et à l'entrée de canal de multidiffusion de prévisualisation configurées, et le renvoi (5) d'une une réponse de création de profil d'opérations de multidiffusion au terminal de ligne optique ; et
le transfert (7) par l'unité de réseau optique d'un flux de données de multidiffusion conformément à l'entrée de transfert d'adresse de multidiffusion correspondante après réception (6) du flux de données de multidiffusion envoyé par le terminal de ligne optique, et la réalisation (8) d'un traitement correspondant lors de la réception d'un message envoyé par un dispositif en aval consistant à : pour l'entrée de canal de multidiffusion de prévisualisation, apprendre une adresse de multidiffusion tout en ajustant un temps d'expiration d'un temporisateur pour qu'il soit égal à un temps de prévisualisation prédéfini, et configurer l'entrée de transfert d'adresse de multidiffusion correspondante ; pour l'entrée de canal de liste blanche de multidiffusion, apprendre l'adresse de multidiffusion, configurer l'entrée de transfert d'adresse de multidiffusion correspondante, et mettre en oeuvre une fonction de vieillissement conformément à un temps de vieillissement d'adresse de multidiffusion, le temps de prévisualisation étant inférieur au temps de vieillissement.

4. Procédé selon la revendication 3, dans lequel l'étape de réalisation du traitement correspondant lors de la réception du message envoyé par le dispositif aval comprend en outre :
pour l'entrée de canal de prévisualisation de multidiffusion, la suppression par l'unité de réseau optique de l'entrée de canal de multidiffusion de prévisualisation correspondante lorsque le temps d'expiration du temporisateur expire, et la suppression de l'entrée de transfert d'adresse de multidiffusion correspondante en même temps ; pour l'entrée de canal de liste blanche de multidiffusion, avant l'expiration du temps de vieillissement, l'actualisation automatique du temps de vieillissement conformément à un message de flux de données de multidiffusion nouvellement reçu.

5. Système de réseau optique passif (GPON) compatible Gigabit pour mettre en oeuvre une prévisualisation de multidiffusion, **caractérisé en ce qu'**il comprend un terminal de ligne optique et une ou plusieurs unités de réseau optique connectées au terminal de ligne optique, dans lequel
le terminal de ligne optique est configuré pour envoyer (2) une commande de création de profil d'opérations de multidiffusion à une unité de réseau optique après avoir achevé (1) l'enregistrement des unités de réseau optique et la configuration des ports ; et
l'unité de réseau optique est configurée pour définir (3) une entité gérée correspondante conformément à la commande de création de profil d'opérations de multidiffusion envoyée par le terminal de ligne optique et stocker (3) des données de configuration comprises dans la commande de création de profil d'opérations de multidiffusion et configurer (4) une entrée de canal de multidiffusion de prévisualisation correspondante conformément aux données de configuration :
dans lequel
les données de configuration dans la commande de création de profil d'opérations de multidiffusion comprennent : un profil d'opérations de multidiffusion à créer et des entrées de canal de multidiffusion à configurer, et un champ réservé dans une entrée de canal de multidiffusion utilisé comme un identifiant qui distingue une entrée de canal de multidiffusion de liste blanche d'une entrée de canal de multidiffusion de prévisualisation.

6. Système selon la revendication 5, dans lequel
parmi les entrées de canal de multidiffusion, pour l'entrée de canal de multidiffusion de liste blanche, le champ réservé est défini comme une valeur d'identifiant de l'entrée de canal de multidiffusion de liste blanche, et pour l'entrée de canal de multidiffusion de prévisualisation, le champ réservé est défini comme une valeur d'identifiant de l'entrée de canal de multidiffusion de prévisualisation ; et
l'unité de réseau optique est configurée pour configurer l'entrée de canal de multidiffusion de prévisualisation correspondante conformément aux données de configuration en configurant une entrée de canal de multidiffusion de liste blanche correspondante pour la valeur d'identifiant de l'entrée de canal de multidiffusion de liste blanche conformément au champ réservé, en plus de la configuration de l'entrée de canal de multidiffusion de prévisualisation correspondante pour la valeur d'identifiant de l'entrée de canal de multidiffusion de prévisualisation conformément au champ réservé, et pour lister l'entrée de canal de multidiffusion de prévisualisation et l'entrée de canal de multidiffusion de liste blanche séparément en utilisant deux indices de marque différents.

7. Système selon la revendication 6, dans lequel
l'unité de réseau optique est en outre configurée pour générer une entrée de transfert d'adresse de multidiffusion correspondante conformément à l'entrée de canal de multidiffusion de liste blanche et à l'entrée de canal de multidiffusion de prévisualisation configurées, retourner (5) une réponse de création de profil d'opérations de multidiffusion au terminal de ligne optique, transférer (7) un flux de données de multidiffusion conformément à l'entrée de transfert d'adresse de multidiffusion correspondante après réception (6) du flux de données de multidiffusion envoyé par le terminal de ligne optique, et réaliser (8) un traitement correspondant lors de la réception d'un message envoyé par un dispositif aval consistant à : pour l'entrée de canal de multidiffusion de prévisualisation, apprendre une adresse de multidiffusion tout en ajustant le temps d'expiration d'un temporisateur pour qu'il soit égal au temps de prévisualisation prédéfini, et configurer l'entrée de transfert d'adresse de multidiffusion correspondante ; pour l'entrée de canal de liste blanche de multidiffusion, apprendre l'adresse de multidiffusion, configurer l'entrée de transfert d'adresse de multidiffusion correspondante et mettre en oeuvre une fonction de vieillissement conformément au temps de vieillissement d'adresse de multidiffusion, le temps de prévisualisation étant inférieur au temps de vieillissement.

8. Système selon la revendication 7, dans lequel
l'unité de réseau optique est en outre configurée pour, pour l'entrée de canal de prévisualisation de multidiffusion, supprimer l'entrée de canal de multidiffusion de prévisualisation correspondante lorsque le temps d'expiration du temporisateur expire, et supprimer l'entrée de transfert d'adresse de multidiffusion correspondante en même temps ; pour l'entrée de canal de liste blanche de multidiffusion, avant l'expiration du temps de vieillissement, rafraîchir automatiquement le temps de vieillissement conformément à un message de flux de données de multidiffusion nouvellement reçu.

9. Appareil d'unité de réseau optique pour mettre en oeuvre une prévisualisation de multidiffusion dans un système de réseau optique passif (GPON) compatible Gigabit, **caractérisé en ce qu'**il comprend un module d'analyse et de traitement de commande, un module de protocole de multidiffusion et un module de transfert d'adresse de multidiffusion qui sont successivement connectés, dans lequel
le module d'analyse et de traitement de commande est configuré pour analyser une commande de création de profil d'opérations de multidiffusion envoyée (2) par un terminal de ligne optique, configurer (3) une entité gérée correspondante, et stocker (3) des données de configuration comprises dans une commande de création de profil d'opérations de multidiffusion dans une base de données, tout en donnant instruction au module de protocole de multidiffusion de configurer une entrée de canal de multidiffusion correspondante ;
le module de protocole de multidiffusion est configuré pour configurer (4) une entrée de canal de multidiffusion de prévisualisation conformément à une instruction du module d'analyse et de traitement de commande et aux données de configuration stockées dans la base de données pour émettre en sortie vers le module de transfert d'adresse de multidiffusion ; et
le module de transfert d'adresse de multidiffusion est configuré pour générer une entrée de transfert d'adresse de multidiffusion correspondante conformément à l'entrée de canal de multidiffusion de prévisualisation émise en sortie par le module de protocole de multidiffusion :
dans lequel
le module d'analyse et de traitement de commande est configuré pour analyser la commande de création de profil d'opérations de multidiffusion envoyée (2) par le terminal de ligne optique en analysant la commande de création de profil d'opérations de multidiffusion conformément à un protocole d'interface de contrôle de gestion de terminal de réseau optique, et en stockant le profil d'opérations de multidiffusion à créer et les entrées de canal de multidiffusion à configurer qui sont contenues dans les données de configuration après que la commande de création de profil d'opérations de multidiffusion ait été vérifiéé comme étant légale, et en utilisant un champ réservé dans une entrée de canal de multidiffusion comme un identifiant qui distingue une entrée de canal de multidiffusion de liste blanche d'une entrée de canal de multidiffusion de prévisualisation.

10. Appareil selon la revendication 9, dans lequel
parmi les entrées de canal de multidiffusion, pour l'entrée de canal de multidiffusion de liste blanche, le champ réservée est défini comme une valeur d'identifiant de l'entrée de canal de multidiffusion de liste blanche, et pour l'entrée de canal de multidiffusion de prévisualisation, le champ réservé est défini comme une valeur d'identifiant de l'entrée de canal de multidiffusion de prévisualisation ; et
le module de protocole de multidiffusion est configuré pour configurer l'entrée de canal de multidiffusion de prévisualisation correspondante conformément à une instruction du module d'analyse et de traitement de commande et aux données de configuration stockées dans la base de données en configurant une entrée de canal de multidiffusion de liste blanche correspondante pour la valeur d'identifiant de l'entrée de canal de multidiffusion de liste blanche conformément au champ réservé, en plus de la configuration de l'entrée de canal de multidiffusion de prévisualisation correspondante pour la valeur d'identifiant de l'entrée de canal de multidiffusion de prévisualisation conformément au champ réservé, et pour lister l'entrée de canal de multidiffusion de prévisualisation et l'entrée de canal de multidiffusion de liste blanche séparément en utilisant deux index de marque différents.

11. Appareil selon la revendication 10, dans lequel
le module de protocole de multidiffusion est en outre configuré pour renvoyer (5) une réponse de création de profil d'opérations de multidiffusion au terminal de ligne optique après avoir achevé la configuration de l'entrée de canal de multidiffusion de prévisualisation et de l'entrée de canal de multidiffusion de liste blanche ; et
le module de transfert d'adresse de multidiffusion est en outre configuré pour transfert (7) un flux de données de multidiffusion conformément à l'entrée de transfert d'adresse de multidiffusion correspondante après réception (6) du flux de données de multidiffusion envoyé par le terminal de ligne optique et pour réaliser (8) un traitement correspondant lors de la réception d'un message envoyé par un dispositif aval consistant à : pour l'entrée de canal de multidiffusion de prévisualisation, apprendre une adresse de multidiffusion tout en ajustant le temps d'expiration d'un temporisateur pour qu'il soit égal au temps de prévisualisation prédéfini, et configurer l'entrée de transfert d'adresse de multidiffusion correspondante ; pour l'entrée de canal de liste blanche de multidiffusion, apprendre l'adresse de multidiffusion, configurer l'entrée de transfert d'adresse de multidiffusion correspondante et mettre en oeuvre une fonction de vieillissement conformément au temps de vieillissement d'adresse de multidiffusion, le temps de prévisualisation étant inférieur au temps de vieillissement.

12. Appareil selon la revendication 11, dans lequel
le module de transfert d'adresse de multidiffusion est en outre configuré pour, pour l'entrée de canal de prévisualisation de multidiffusion, supprimer l'entrée de canal de multidiffusion de prévisualisation correspondante lorsque le temps d'expiration du temporisateur expire, et supprimer l'entrée de transfert d'adresse de multidiffusion correspondante en même temps ; pour l'entrée de canal de liste blanche de multidiffusion, avant l'expiration du temps de vieillissement, rafraîchir automatiquement le temps de vieillissement conformément à un message de flux de données de multidiffusion nouvellement reçu.
